# FASCICULE DE BREVET EUROPEEN

(11) **EP 2 243 617 B1**
(45) Date de publication et mention de la délivrance du brevet: **15.02.2012**
(21) Numéro de dépôt: 10159586.6
(22) Date de dépôt: 12.04.2010
(51) Int. Cl.: B29C 51/30, B29C 51/08, B29C 70/46, B29C 53/04

(54) **Outillage d'estampage pour pièces thermoplastiques et procédé**
Werkzeug zum Prägen von thermoplastischen Teilen, und entsprechendes Verfahren
Stamping tool for thermoplastic components and method

(30) Priorité: 24.04.2009 FR 0952687
(43) Date de publication de la demande: 27.10.2010
(73) Titulaire: DAHER AEROSPACE, 41400 Saint-Julien-de-Chedon (FR)
(72) Inventeur: Jumel, Jean Pierre, 78290 Croissy sur Seine (FR)
(74) Mandataire: Aupetit, Muriel J. C.

(56) Documents cités:
- EP-A1- 0 603 066
- EP-A1- 1 559 533
- EP-A2- 0 416 216
- EP-A2- 1 997 570
- DE-A1-102007 037 649
- JP-A- 61 269 935
- US-A- 1 916 435

## Description

L'invention concerne un outillage pour mettre en forme par estampage des pièces à base de matière thermoplastique, notamment en matière thermoplastique renforcée, et un procédé de fabrication lié à cet outillage.

L'invention concerne plus particulièrement la fabrication de pièces à destination de l'aéronautique mais n'y est pas limitée.

Les pièces en matériau composite pour l'aviation peuvent être réalisées à partir de matière thermoplastique et de fibres longues de renforcement. La mis en forme des pièces ne peut être réalisée par allongement de la matière en raison de la nature des fibres, ces dernières étant des fibres longues. Aussi cette mise en forme est-elle obtenue par un procédé de pliage à partir d'un flan en matériau composite pré-découpé, préchauffé, et à l'aide d'un outil d'estampage chauffant, tel que décrit dans le document EP 1 559 533.

Plus précisément, l'outillage de façonnage de telles pièces comporte de manière connue une matrice en creux et un poinçon en relief de forme complémentaire à la matrice et destiné à être enfoncé et comprimé contre l'intérieur de la matrice. Un flan de matière est initialement chauffé, transféré entre la matrice et le poinçon, puis plié en amenant le poinçon à la rencontre de la matrice (ou inversement), la mise en forme finale étant assurée par pressage du poinçon contre la matrice tout en réservant l'épaisseur de matière, et enfin par refroidissement et démoulage.

De manière usuelle, une matrice forme une cavité dont la forme correspond à la géométrie extérieure de la pièce à conformer à partir du flan.

La cavité présente par exemple deux parois adjacentes réunies par une arête de manière à constituer une pièce du type cornière comprenant deux surfaces adjacentes s'étendant à partir d'une unique ligne de pliage.

Un autre exemple de cavité présente différentes faces que sont un fond et des parois latérales liées angulairement à ce fond, les arêtes de séparation de ces faces étant destinées à correspondre aux lignes de pliage qui sont à former dans le flan à façonner.

La pièce ainsi obtenue en une seule opération d'estampage comporte une pluralité de lignes de pliage qui correspondent aux arêtes séparant les différentes faces de la cavité.

Cependant, il est impossible de réaliser concomitamment à ces lignes de pliage agencées selon les arêtes de la cavité, c'est-à-dire à l'intersection de deux faces de la cavité, au moins une ligne de pliage qui soit disposée en dehors de ces arêtes et au niveau de l'une au moins de ces faces de la cavité.

En outre, selon le type de pliage à réaliser et la dimension du flan, il peut arriver qu'une partie de la matière s'étendant selon un plan ou une face de la cavité butte contre une face adjacente de la cavité, perturbant alors le ou les pliages déjà initiés en fond de matrice.

Aussi, certaines pièces ne peuvent pas être fabriquées en une seule opération de passe dans l'outillage. Elles sont par exemple réalisées en deux phases d'estampage, une première phase assurant la mise en forme principale de la pièce selon certaines lignes de pliage, puis une seconde phase qui forme les autres lignes de pliage. Dans une autre variante de réalisation, les pièces sont conçues en plusieurs parties qui sont estampées séparément, et ensuite assemblées par des moyens de fixation tels que des rivets.

L'inconvénient d'une telle fabrication est de multiplier les opérations d'estampage ou d'assemblage.

L'invention a donc pour but de simplifier le procédé de fabrication par estampage d'une pièce à base de matière thermoplastique selon une pluralité de pliages, en particulier selon au moins trois pliages.

Selon l'invention, l'outillage pour fabriquer par estampage une pièce à base de matière thermoplastique à partir d'un flan de ladite matière, comporte une matrice en creux délimitée par un fond, des parois latérales et une ouverture opposée au fond, ainsi qu'un poinçon en relief destiné à coopérer avec la matrice via l'ouverture, et est caractérisé en ce qu'il comporte au moins un élément mobile apte à créer dans la matrice ou le poinçon au moins un évidement qui est destiné à être obturé lors de la coopération de la matrice et du poinçon.

L'évidement est agencé dans le fond et/ou les parois latérales de la matrice ou bien dans le corps du poinçon

Ainsi si de manière usuelle, l'ouverture de la matrice est destinée à accueillir un flan qui sera mis en forme selon une géométrie tridimensionnelle grâce aux empreintes respectives, de l'intérieur de la matrice, et de l'extérieur du poinçon destiné à être introduit et comprimé contre l'intérieur de ladite matrice, l'évidement créé par l'élément mobile selon l'invention et dessiné par exemple dans le fond ou les parois de la matrice permet très avantageusement de fournir une place pour l'introduction d'une partie du flan qui viendrait sinon malencontreusement en butée contre l'intérieur de la cavité et perturberait le pliage du flan. L'élément mobile permet, lorsqu'il est mis en en déplacement pour obturer l'évidement, d'assurer convenablement le pliage de cette partie de flan et est destiné à participer à sa mise en forme.

L'évidement peut consister en un trou borgne ou un trou traversant l'épaisseur de la matrice ou du poinçon. Le volume de l'évidement est adapté pour accueillir de manière provisoire et suffisante la partie du flan en saillie provisoire du reste de la surface générale du flan.

L'outillage de l'invention assure donc de réaliser l'estampage d'un flan selon plusieurs lignes de pliage à partir d'une seule opération, contrairement à l'art antérieur qui nécessite pour le même type de pièce plusieurs étapes.

La pièce ainsi obtenue permet avantageusement de gagner en masse de matière, ce qui est fort appréciable dans le domaine de l'aéronautique.

En outre, on gagne en coût de matière et en coût de production.

La coopération de la matrice et du poinçon se fait par déplacement de l'un vers l'autre, le poinçon et la matrice pouvant l'un ou l'autre être mobile, ou bien tous deux mobiles.

Selon une caractéristique, l'élément mobile est associé à la matrice ou au poinçon.

Selon une autre caractéristique, l'élément mobile présente une forme adaptée à obturer l'évidement avec lequel il coopère, ce qui permet, après pliage de la partie du flan qui était introduite dans l'évidement, de reconstituer la forme pleine de la cavité en vue de l'enfoncement total du poinçon et de son application ferme contre la cavité pour compacter la matière.

L'élément mobile comporte en particulier une surface de contact dont la forme est adaptée à la forme de la surface à mettre en forme en regard de l'élément mobile.

Avantageusement, l'outillage comporte un moyen de verrouillage pour bloquer l'élément mobile en position de fin de course dans l'évidement. De cette manière, l'élément mobile est verrouillé évitant tout risque d'ouverture inopinée de l'évidement lors de la compression du poinçon contre la matrice.

Selon une autre caractéristique, l'élément mobile est assujetti au déplacement du poinçon ou de la matrice selon un couplage mécanique ou indépendant.

Selon une variante de réalisation de couplage mécanique, l'outillage comporte un support portant le poinçon et dont le mouvement commande le déplacement du poinçon, ledit support comprenant un bloc de poussée destiné à assurer le mouvement de l'élément mobile, et dont la géométrie est adaptée à coopérer avec la géométrie de l'élément mobile en vue de contrôler la vitesse de déplacement dudit élément mobile par rapport à la vitesse de déplacement dudit poinçon.

De préférence, l'élément mobile comporte un pan incliné apte à coopérer avec un pan coupé du bloc de poussée, le pan coupé étant de pente complémentaire au pan incliné de l'élément mobile.

Le bloc de poussée constitue avantageusement par sa forme géométrique un moyen de verrouillage pour bloquer l'élément mobile arrivé en fin de course dans l'évidement de la matrice.

Selon une autre variante de réalisation de couplage mécanique, l'outillage comporte un bloc fixe de couplage mécanique agencé à distance de l'élément mobile et à l'opposé de la matrice, et destiné à coopérer avec un bloc de poussée lié au support du poinçon et apte à être mobile dans ce support, le bloc de poussée présentant deux pans coupés opposés de pentes inverses et destinés à coopérer mutuellement avec respectivement un pan incliné de l'élément mobile et un profil biseauté du bloc fixe.

Le bloc fixe et le bloc de poussée constituent avantageusement un moyen de verrouillage pour bloquer l'élément mobile arrivé en fin de course dans l'évidement de la matrice.

L'élément mobile peut plutôt être actionné indépendamment du poinçon ou de la matrice, l'outillage comportant à cet effet un actionneur contrôlant le déplacement et le verrouillage de l'élément mobile. L'actionneur est de préférence à commande électromécanique, électropneumatique ou électro-hydraulique.

Par ailleurs, en vue d'assurer le transfert d'un flan à estamper jusqu'à la matrice, l'outillage comporte avantageusement l'utilisation d'un film principal thermorésistant fixé sur une partie de l'une des faces du flan, cette face étant destinée à être en regard du fond et/ou d'au moins l'une des parois de la matrice, et la partie associée au film étant celle destinée à coopérer avec le fond et/ou la ou les parois de la matrice, excepté avec la zone correspondant et entourant l'évidement.

Ainsi, le film associé au flan ne risquera pas d'obturer l'évidement et d'empêcher la fermeture de l'élément mobile. En outre, il n'interfèrera pas dans la zone d'intersection des pliages correspondant à la zone réunissant l'évidement, la paroi qui lui est adjacente, et le fond.

Avantageusement, l'outillage utilise un film secondaire sur lequel est destiné à reposer sans y être fixée la partie du flan restante qui n'est pas associée au film principal, de sorte que ce film participe au transfert du flan jusqu'à la matrice, sans nécessiter ensuite d'être introduit inutilement et de manière gênante dans la matrice.

L'invention est également relative à un procédé de fabrication par estampage de pièces à base de matière thermoplastique, notamment en matière thermoplastique renforcée par exemple par des fibres longues ou continues, tissées ou non, au moyen de l'outillage décrit ci-dessus.

Le procédé comporte notamment les étapes successives suivantes :
- la mise à plat d'un flan au niveau de l'ouverture de la matrice,
- le déplacement du poinçon en regard du flan et vers l'intérieur de la matrice ou le déplacement de la matrice en direction du poinçon, pour former des pliages dans le flan,
- l'accueil temporaire d'une partie du flan à travers l'évidement de l'outillage,
- le mouvement de l'élément mobile concomitamment au déplacement du poinçon ou de la matrice pour former au moins un pliage supplémentaire,
- l'obturation de l'évidement par le positionnement en fin de course de l'élément mobile qui est de préférence verrouillé, et
- la compression du poinçon contre la matrice.

Ainsi, le procédé de l'invention permet par la création d'un évidement dans l'outillage d'assurer un stockage temporaire d'une partie du flan à estamper tandis que sont initiés les premiers pliages, puis par le déplacement de l'élément mobile de réaliser le pliage de la partie précédemment stockée et enfin par l'obturation de l'évidement de reproduire l'intégrité de la matrice pour permettre une mise en pression du poinçon lors de la phase finale de l'estampage.

La cinématique de l'élément mobile est contrôlée par le déplacement du poinçon ou de la matrice, de manière indépendante ou via un couplage mécanique de l'élément mobile avec le poinçon ou respectivement de la matrice.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique d'un outillage selon l'invention ;
- La figure 2a illustre un exemple de pièce mise en forme grâce à l'outillage de la figure 1 ;
- La figure 2b est un flan à partir duquel la pièce de la figure 2a est obtenue;
- les figures 3 et 4 sont des vues partielles schématiques en perspective de l'intérieur de la matrice au cours de la mise en forme de la pièce à deux étapes distinctes du procédé de fabrication;
- les figures 5a à 5d illustrent schématiquement des étapes du procédé d'estampage selon une variante de réalisation de l'outillage ;
- les figures 6a et 6b illustrent schématiquement deux étapes du procédé d'estampage selon une autre variante de réalisation de l'outillage ;
- la figure 7 est une vue schématique et de dessus d'un flan avant son transfert pour réaliser son estampage.

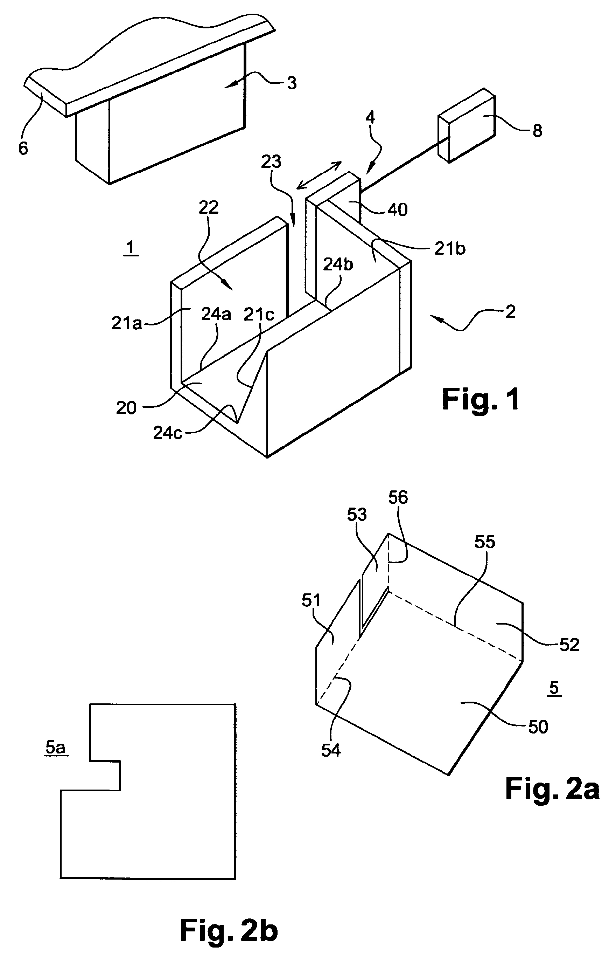

La figure 1 illustre un outillage 1 pour fabriquer par estampage une pièce en matière composite, notamment à base d'au moins un matériau thermoplastique et de fibres longues de renforcement du type fibres de verre ou de carbone.

Un exemple schématique de pièce 5 est montré en figure 2a, cette pièce étant réalisée à l'aide de l'outillage de l'invention à partir d'un flan plat 5a montré en figure 2b.

En regard de la figure 1, l'outillage 1 comporte une matrice 2 en creux, un poinçon 3 mobile et apte à épouser l'empreinte intérieure de la matrice, et selon l'invention, un autre élément mobile 4 destiné à coopérer avec la matrice.

L'outillage permet donc de mettre en forme la pièce 5 à partir d'un flan plat. La matrice 2 et le poinçon 3, éventuellement l'élément mobile 4, sont chauffants pour donner au matériau ses propriétés mécaniques. Le flan est destiné à être emprisonné entre la matrice et le poinçon, son pliage et sa mise en forme étant obtenus par serrage du poinçon contre la matrice.

La matrice 2 forme une cavité délimitée par un fond 20, des parois latérales, ici par exemple au nombre de trois telles que 21 a, 21 b et 21 c, et une ouverture 22 destinée à être fermée par le poinçon 3 tout en prenant en sandwich le flan de matière à mettre en forme. La démarcation entre le fond 20 et les parois latérales 21 a, 21 b, 21 c est formée par les arêtes respectives 24a, 24b, 24c de la cavité.

Selon l'invention, la matrice comporte en outre au moins un évidement agencé dans le fond et/ou dans l'une des parois latérales, et à travers lequel l'élément mobile 4 est apte à être déplacé dans ou contre la cavité de la matrice.

Cet évidement est selon l'invention créé par l'élément mobile lorsqu'il est en retrait de la matrice. En position de coopération avec la matrice, il est destiné à obturer l'évidement rendant à la matrice ses parois pleines contre lesquelles va être exercée la pression du poinçon afin de finaliser l'estampage.

Dans l'exemple de réalisation et tel que visible sur la figure 1, l'évidement 23 est disposé dans l'angle de la paroi 21 a et de manière adjacente à la paroi 21 b. L'élément mobile 4 est destiné à obturer l'évidement 23 pour reconstituer une surface pleine prolongeant dans son plan la paroi 21 a, jusqu'à la paroi latérale 21 b, transversale à la paroi 21 a.

Le poinçon 3 est destiné à être introduit dans la cavité via l'ouverture 22. Il présente une forme extérieure complémentaire à la forme intérieure de la cavité afin d'épouser par compression l'ensemble de la géométrie de la cavité. Il est de préférence solidaire d'un support 6 apte à être déplacé.

La pièce 5 est ainsi obtenue grâce à l'outillage 1 à partir du pliage du flan plat de la figure 2b. Cette pièce 5, telle que visible sur la figure 2a, comporte une pluralité de facettes telles que 50 à 53 et des lignes de pliages illustrées en pointillés, 54 à 56.

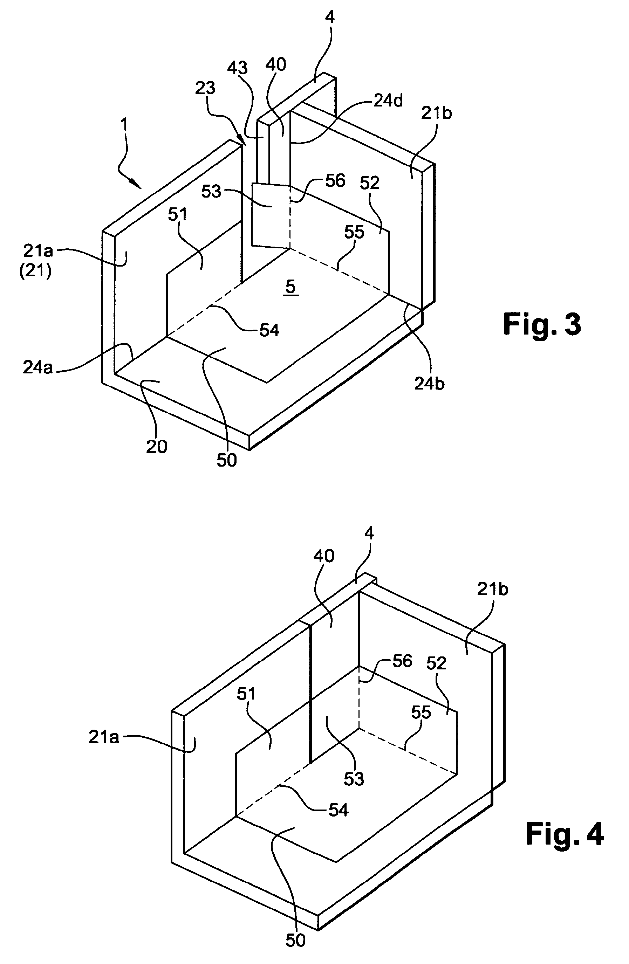

La figure 3 montre la pièce 5 au cours de sa mise en forme dans la cavité de la matrice, l'une des parois (21 c) de la matrice et le poinçon 3 n'étant pas illustrés pour une meilleure compréhension. Le fond 20 et les parois latérales adjacentes 21 a et 21 b de la cavité vont permettre de réaliser les facettes respectives 50, 51 et 52 de la pièce, tandis que les arêtes 24a et 24b fournissent respectivement les lignes de pliage 54 et 55 communes aux facettes 50 et 51 et respectivement 50 et 52.

La facette 53 de la pièce et la ligne de pliage 56 sont réalisées grâce à l'élément mobile 4, la facette 53 étant avant son pliage coplanaire à la facette 52 et avantageusement accueillie dans l'évidement 23. Le déplacement de l'élément mobile 4 au cours du procédé d'estampage engendre, tel que visible sur la figure 3, une mise en appui dudit élément mobile contre la facette 53 et assure un pliage selon la ligne 56 correspondant à la ligne d'intersection 24d de la paroi 21 b de la cavité avec ledit élément mobile.

La mise en forme finale de toutes les facettes, et y compris de la facette 53 est obtenue par la fin de course de l'élément mobile venant en butée contre la paroi 21 a et obturant l'évidement 23, en combinaison avec la compression du poinçon contre le fond et les parois latérales de la matrice.

La cavité de la matrice a ici une forme sensiblement parallélépipédique pour donner à la pièce 5 des facettes de formes carrée et/ou rectangulaire. Bien entendu, le profil de la cavité (le nombre de parois, leur inclinaison angulaire, leur relief...) sera adapté à la géométrie que devra présenter la pièce finale.

L'évidement 23 est disposé à l'endroit idoine de la cavité qui permet d'éviter toute butée d'une partie du flan ne pouvant épouser de prime abord l'ensemble du profil de la cavité, et autorise au contraire l'échappement de cette partie de flan hors de la cavité afin d'assurer convenablement son pliage et sa mise en forme.

L'évidement 23 de la matrice est de préférence agencé en bord d'une paroi ou du fond pour fournir au flan un pliage transversal, ou du moins orienté angulairement, tout en s'étendant selon l'intersection de deux plans qui présentent déjà préalablement chacun, un pliage respectif avec un autre plan commun.

L'élément mobile 4 est destiné à obturer l'évidement 23. La surface 40 de l'élément mobile (figure 4) destinée à venir en regard de l'intérieur de la matrice est conçue pour correspondre aux lignes de découpe de l'évidement.

La surface 40 présente de préférence une aire supérieure à celle de la facette 53 du flan qui est destinée à reposer contre elle. Cette surface 40 est en outre selon l'invention adaptée à la forme qu'il est nécessaire d'imposer à la facette 53.

La surface 40 est destinée à être coplanaire avec la paroi 21 a de la cavité. Elle pourrait toutefois être sensiblement décalée (en saillie ou retrait de la cavité) pour compenser la variation angulaire après refroidissement, entre les facettes de la pièce qui ne sont pas liées entre elles (effet dit « spring back » en anglais).

L'élément mobile dans cet exemple de réalisation a une forme sensiblement parallélépipédique et présente une tranche de contact 43 (figure 3), destinée à s'appuyer contre le flan pour former le pliage de la facette 53 rectangulaire, s'étendant dans un plan transversal à la direction de déplacement de l'élément mobile.

L'élément mobile 4 complète ainsi la paroi 21 a pour reconstituer l'intégralité de la matrice en termes d'étanchéité et de rigidité afin que celle-ci supporte la mise en pression nécessaire à la finalisation de l'opération d'estampage via le poinçon.

Lors de la compression du poinçon, il est impératif que l'élément mobile 4 reste immobile et ne puisse reculer pour que le compactage de la matière soit effectué contre une surface rigide et pleine. Au moins un moyen de verrouillage de l'élément mobile en fin de course est avantageusement prévu.

L'élément mobile 4 est soit assujetti au déplacement du poinçon 3 par couplage mécanique, soit piloté de manière indépendante par un actionneur 8 tel que visible sur la figure 1.

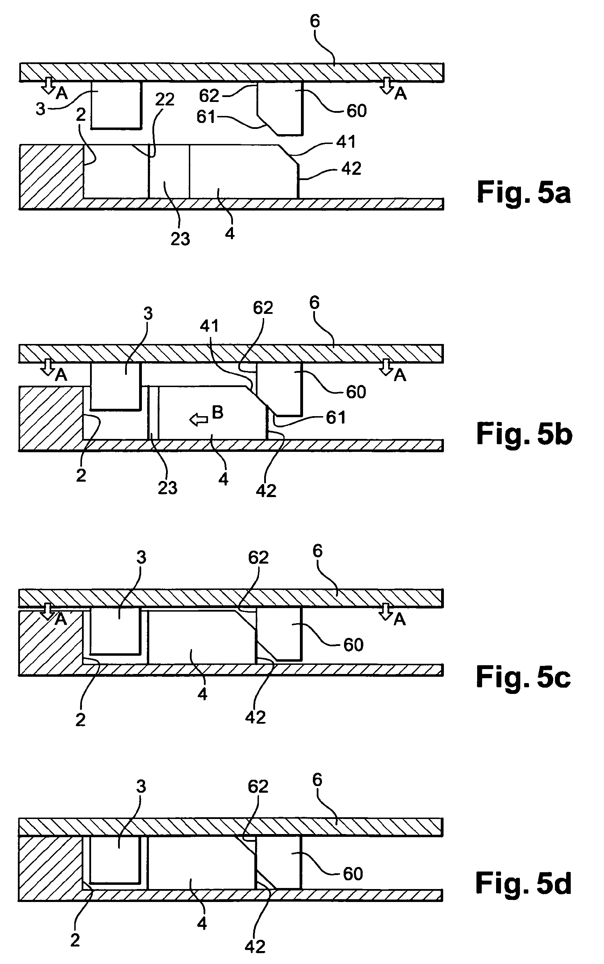

La cinématique de l'élément mobile et du poinçon selon le procédé de l'invention est à présent décrite en regard des figures 5a à 5d. Ces figures correspondent en outre à un outillage pourvu d'un couplage mécanique entre l'élément mobile et le poinçon.
- Figure 5a : le flan de matière (non illustré) préchauffé est plaqué contre l'ouverture de la matrice ; son transfert jusqu'à la matrice sera détaillé plus loin. L'étape de cette figure correspond à l'initialisation du déplacement du poinçon 3 vers la cavité de la matrice 2 selon les flèches A, montrant le rapprochement entre le support 6 du poinçon 3 et la matrice 2, tandis que l'élément mobile 4 reste immobile en recul de la matrice;
- Figure 5b : le poinçon 3 amené au contact du flan descend dans la matrice 2 initiant le pliage du flan vers le fond et les parois de la matrice, tandis que l'élément mobile 4 débute sa translation selon la flèche B et son introduction dans l'évidement 23 de la matrice afin d'entamer le pliage de la facette 53 de la pièce ;
- Figure 5c : l'élément mobile 4 obture totalement l'évidement 23 et son déplacement est verrouillé, tandis que le poinçon 3 n'est pas encore arrivé en fin de course. Toutes les facettes et pliages du flan sont à cette étape réalisés;
- Figure 5d : la finalisation de l'estampage est effectuée en compactant la matière par la compression du poinçon contre la cavité de la matrice.

Dans cette variante de réalisation de couplage mécanique entre le poinçon et l'élément mobile, le poinçon 3 est solidaire d'un support 6 apte à être animé d'un mouvement de translation. Le support 6 comporte en outre un bloc de poussée 60 à pan coupé 61 et destiné à coopérer avec la partie arrière de l'élément mobile 4 (opposée à la matrice) pour assurer son déplacement.

L'élément mobile 4 présente à l'extrémité opposée de celle orientée vers la matrice, un pan incliné 41 de pente inverse au pan coupé 61 du bloc 60. Lors de la rencontre du bloc 60 avec l'élément mobile 4, ledit bloc 60 exerce une force de poussée contre l'élément mobile par application de son pan coupé 61 contre le pan incliné 41 de pente complémentaire, la vitesse de déplacement de l'élément mobile étant imposée par la pente donnée au pan coupé et au pan incliné.

Le pan incliné 41, tout comme le pan coupé 61 qui se poursuit en direction du support 6 par un profil de rupture 62, ne s'étendent que sur une certaine longueur correspondant à la distance à parcourir pour l'élément mobile. Lorsque le pan coupé 61 n'est plus en contact avec le pan incliné 41 (figure 5c), l'élément mobile arrive en fin de course et obture complément l'évidement 23.

En outre, l'élément mobile se termine par son extrémité opposée à l'évidement, selon un profil 42 s'étendant transversalement à la direction de déplacement de l'élément mobile. Ce profil 42 s'appuie contre le profil de rupture 62 du bloc 60, leur coopération constituant un moyen de verrouillage de l'élément mobile 4 qui est alors en butée contre le bloc 60 et ne peut plus reculer.

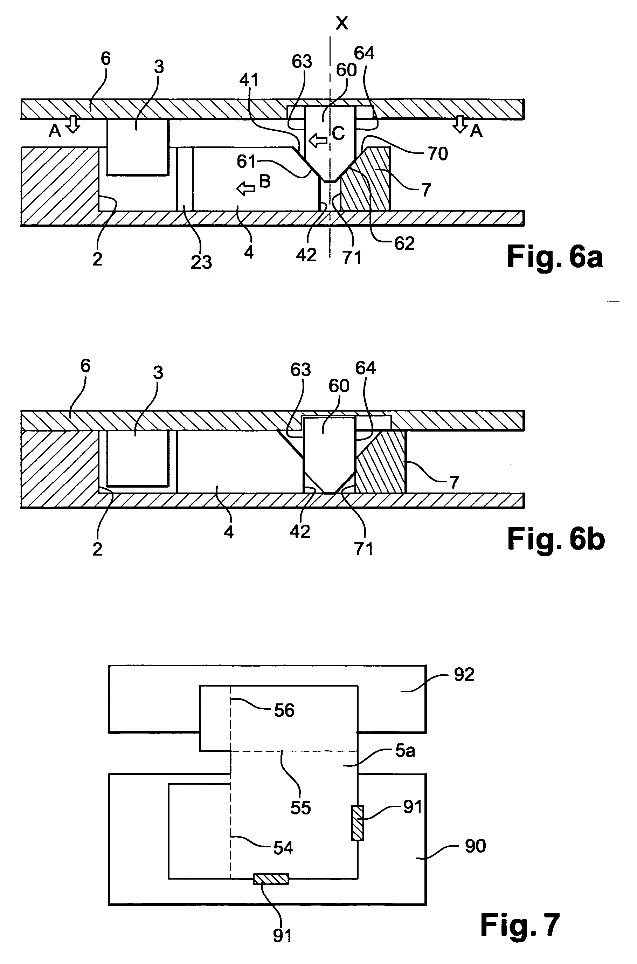

Les figures 6a et 6b illustrent une autre variante de réalisation de couplage mécanique entre le poinçon et la matrice. L'outillage comporte le bloc de poussée 60 de la variante précédente, ce bloc étant en outre apte à se déplacer en translation dans le support 6 selon la flèche C. Il comprend également un bloc fixe 7 agencé à distance de l'élément mobile.

Le bloc de poussée 60 est destiné à se glisser entre l'élément mobile et le bloc fixe par un déplacement selon les flèches A et C, poussant en translation l'élément mobile vers la matrice selon la flèche B.

Le bloc de poussée 60 comporte avantageusement de manière symétrique à un axe X parallèle au déplacement du support 6 (selon la flèche A), deux pans droits 63 et 64 s'étendant depuis le support 6, et à son extrémité opposée de celle associée au support, deux pans inclinés opposés 61 et 62 de pentes inverses et convergentes vers l'axe X. L'élément mobile 4 comporte tel que pour la variante précédente un pan incliné 41 et un profil transversal d'extrémité 42.

Le bloc fixe 7 comprend un profil biseauté 70 en regard de l'élément mobile, de pente inverse au pan incliné 41 dudit élément mobile. Le profil biseauté 70 se prolonge de manière abrupte par un profil 71 qui est parallèle au profil 42 de l'élément mobile.

En regard de la figure 6a, le bloc 60 vient en butée par déplacement selon la flèche A, d'une part contre le bloc 7 par la coopération des surfaces 62 et 70, et d'autre part, contre l'élément mobile 4 via les surfaces 61 et 41. Par ailleurs le déplacement du bloc 60 selon la flèche C permet de cumuler les déplacements induits par les deux forces de réaction qui sont générées par respectivement, le contact du bloc 60 contre le bloc 7, et le contact du bloc 60 contre l'élément mobile 4. Ainsi, le profil biseauté 70 constitue avantageusement une seconde pente de guidage pour le bloc 60 permettant d'augmenter la vitesse de locomotion de l'élément mobile par rapport à la vitesse obtenue dans la variante précédente.

En regard de la figure 6b, lorsque la coopération des pans inclinés 61 et 62 avec respectivement le pan incliné 41 et le profil biseauté 70 est terminée, l'élément mobile est arrivé en fin de course et le bloc 60 est bloqué par le bloc fixe 7. La coopération du profil 42 de l'élément mobile et du pan 63 du bloc 60, ainsi que du pan 64 du bloc 60 et du profil 71 du bloc fixe 7 constitue ainsi un moyen de verrouillage pour le déplacement de l'élément mobile.

Dans une autre variante encore, le déplacement de l'élément mobile 4 n'est pas couplé mécaniquement à celui du poinçon 3 mais est contrôlé de manière indépendante, tel qu'illustré schématiquement en figure 1 par l'actionneur 8. Cet actionneur est par exemple à commande électropneumatique, électromécanique ou électro-hydraulique. L'actionneur est piloté en relation avec la fermeture de l'ensemble poinçon-matrice.

Il est enfin expliqué le transfert du flan jusqu'à la matrice.

De manière usuelle, le flan est préalablement chauffé avant d'être transporter jusqu'à l'entrefer matrice-poinçon. En particulier, deux méthodes de transfert sont couramment utilisées. L'une d'elles consiste à utiliser un cadre qui supporte le flan jusqu'à l'ouverture de la matrice puis à détacher le cadre et lâcher le flan dans la matrice. L'autre méthode est de transférer le flan sur un film de support.

Selon cette dernière méthode, le transfert jusqu'à la matrice est réalisé au moyen d'un film thermorésistant, tel qu'un film en polyimide, placé sous le flan et en y étant fixé par un adhésif thermorésistant. Après estampage du flan doté du film en face arrière, le film est décollé de la pièce après le démoulage de celle-ci.

Toutefois, l'invention propose une solution spécifique à la manière d'associer un tel film au flan destiné à être plié. En effet, l'outillage de l'invention pose les difficultés suivantes :
- si le film recouvre entièrement la surface arrière du flan, celui-ci occultera l'évidement 23 et empêchera l'introduction de l'élément mobile ;
- dans la zone proche de l'intersection des pliages 54, 55 et 56, le film aura tendance à se plisser et à se rompre de façon aléatoire pour accompagner le pliage du flan, provoquant des marques visibles sur la surface arrière de la pièce une fois obtenue.

Aussi, la solution de l'invention consiste à fournir plusieurs films au lieu d'un seul, chaque film étant soumis à un nombre minimal de pliages, idéalement un seul.

La figure 7 illustre l'association de deux films au flan 5a. Pour une meilleure compréhension de l'emplacement des films par rapport à leur coopération avec la matrice, ont également été dessinés les pliages 54 à 56 destinés à être obtenus.

Un film principal 90 est apposé et fixé par des moyens adhésifs 91 sur la majeure partie arrière du flan correspondant aux facettes 50 et 51 à former. Ce film accompagnant l'estampage ne pose pas de problème, car il ne couvre qu'une zone de simple pliage (le pliage 54), et n'interfère pas avec l'évidement de la matrice.

Un film secondaire 92 supporte, sans y être fixé, l'autre partie du flan destinée à former les facettes 52 et 53. Lors de l'estampage, cette partie de flan glisse dans l'ouverture 22 et le long de la paroi 21 b de la matrice, tandis que le film 92 qui n'est pas fixé reste en dehors de la matrice. Le film secondaire 92 ne produit ainsi aucune interférence dans l'outillage.

## Revendications

1. Outillage (1) pour fabriquer par estampage une pièce à base de matière thermoplastique à partir d'un flan de ladite matière, comportant une matrice en creux (2) délimitée par un fond (20), des parois latérales (21 a, 21 b, 21 c) et une ouverture (22) opposée au fond, ainsi qu'un poinçon (3) en relief destiné à coopérer avec la matrice via l'ouverture (22), **caractérisé en ce qu'**il comporte au moins un élément mobile (4) apte à créer dans la matrice ou le poinçon au moins un évidement (23) qui est destiné à être obturé lors de la coopération de la matrice et du poinçon.

2. Outillage selon la revendication 1, **caractérisé en ce que** l'évidement (23) est créé dans le fond et/ou les parois latérales de la matrice ou bien dans le corps du poinçon.

3. Outillage selon la revendication 1 ou 2, **caractérisé en ce que** l'élément mobile (4) présente une forme adaptée à obturer l'évidement (23) avec lequel il coopère.

4. Outillage selon l'une quelconque des revendications précédentes, **caractérisé en ce que** l'élément mobile (4) comporte une surface de contact (43) dont la forme est adaptée à la forme de la surface à mettre en forme en regard de l'élément mobile.

5. Outillage selon l'une quelconque des revendications précédentes, **caractérisé en ce qu'**il comporte un moyen de verrouillage (60, 7, 8) pour bloquer l'élément mobile (4) en position de fin de course dans l'évidement (23).

6. Outillage selon l'une quelconque des revendications précédentes, **caractérisé en ce que** l'élément mobile (4) est assujetti au déplacement du poinçon (3) ou de la matrice (2) selon un couplage mécanique ou indépendant.

7. Outillage selon l'une quelconque des revendications précédentes, **caractérisé en ce qu'**il comporte un support (6) portant le poinçon (3) et dont le mouvement commande le déplacement du poinçon, ledit support comprenant un bloc de poussée (60) destiné à assurer le mouvement de l'élément mobile (4) et dont la géométrie est adaptée à coopérer avec la géométrie de l'élément mobile en vue de contrôler la vitesse de déplacement dudit élément mobile par rapport à la vitesse de déplacement dudit poinçon.

8. Outillage selon la revendication 7, **caractérisé en ce que** l'élément mobile (4) comporte un pan incliné (41) apte à coopérer avec un pan coupé (61) du bloc de poussée (60), le pan coupé étant de pente complémentaire au pan incliné (41).

9. Outillage selon la revendication 7, **caractérisé en ce qu'**il comporte un bloc fixe (7) de couplage mécanique agencé à distance de l'élément mobile (4) et à l'opposé de la matrice (2), et destiné à coopérer avec le bloc de poussée (60) apte à être mobile dans le support, le bloc de poussée présentant deux pans coupés opposés (61, 62) de pentes inverses et destinés à coopérer mutuellement avec respectivement un pan incliné (41) de l'élément mobile et un profil biseauté (70) du bloc fixe.

10. Outillage selon la revendication 9, **caractérisé en ce que** l'évidement (23) est créé dans la matrice par l'élément mobile (4) et **en ce que** le bloc fixe (7) et le bloc de poussée (60) constituent un moyen de verrouillage pour bloquer l'élément mobile arrivé en fin de course dans l'évidement (23) de la matrice.

11. Outillage selon la revendication 5, **caractérisé en ce qu'**il comporte un actionneur (8) contrôlant le déplacement et le verrouillage de l'élément mobile indépendamment du déplacement du poinçon ou de la matrice, l'actionneur étant de préférence à commande électromécanique électropneumatique ou électro-hydraulique.

12. Outillage selon l'une quelconque des revendications précédentes, **caractérisé en ce qu'**il comporte l'utilisation d'un film principal thermorésistant (90) fixé sur une partie de l'une des faces d'un flan (5a) destiné à être estampé par ledit outillage, cette face étant destinée à être en regard du fond et/ou d'au moins l'une des parois de la matrice, et la partie associée au film étant celle destinée à coopérer avec le fond et/ou la ou les parois de la matrice, excepté avec la zone correspondant et entourant l'évidement (23).

13. Outillage selon la revendication 12, **caractérisé en ce qu'**il utilise un film secondaire (92) sur lequel est destiné à reposer sans y être fixée la partie du flan restante qui n'est pas associée au film principal (90).

14. Procédé de fabrication par estampage d'une pièce à base de matière thermoplastique, notamment en matière thermoplastique renforcée par exemple par des fibres longues ou continues, tissées ou non, au moyen d'un outillage selon l'une quelconque des revendications précédentes.

15. Procédé selon la revendication 14, **caractérisé en ce qu'**il comporte les étapes successives suivantes :
- la mise à plat d'un flan (5a) au niveau de l'ouverture (22) de la matrice (2),
- le déplacement du poinçon (3) en regard du flan et vers l'intérieur de la matrice ou le déplacement de la matrice en direction du poinçon, pour former des pliages dans le flan,
- l'accueil temporaire d'une partie du flan à travers l'évidement (23) de l'outillage,
- le mouvement de l'élément mobile (4) concomitamment au déglacement du poinçon ou de la matrice pour former au moins un pliage supplémentaire,
- l'obturation de l'évidement (23) par le positionnement en fin de course de l'élément mobile (4) qui est de préférence verrouillé, et
- la compression du poinçon (3) contre la matrice (2).

## Claims

1. A tool (1) for manufacturing a piece made of thermoplastic material by stamping a blank of the said material, comprising a hollow matrix (2) defined by a base (20), side walls (21a, 21b, 21c) and an opening (22) opposite the base, and an embossed punch (3) designed to cooperate with the matrix through the opening (22), **characterised in that** it comprises at least one mobile element (4) adapted to create in the matrix or punch at least one recess (23) that is designed to be closed when the matrix and punch cooperate.

2. A tool according to claim 1, **characterised in that** the recess (23) is created in the base and/or side walls of the matrix or in the body of the punch.

3. A tool according to claim 1 or 2, **characterised in that** the mobile element (4) has a shape adapted to close the recess (23) with which it cooperates.

4. A tool according to any of the preceding claims, **characterised in that** the mobile element (4) comprises a contact surface (43) with a shape adapted to the shape of the surface to be formed opposite the mobile element.

5. A tool according to any of the preceding claims, **characterised in that** it comprises locking means (60, 7, 8) for locking the mobile element (4) in the end-of-travel position in the recess (23).

6. A tool according to any of the preceding claims, **characterised in that** the mobile element (4) is subjected to the displacement of the punch (3) or the matrix (2) using mechanical or independent coupling.

7. A tool according to any of the preceding claims, **characterised in that** it comprises a support (6) bearing the punch (3), the movement of which controls the displacement of the punch, the said support comprising a thrust block (60) designed to carry out the movement of the mobile element (4), with geometry adapted to cooperate with the geometry of the mobile element in order to control the displacement speed of the said mobile element in relation to the displacement speed of the said punch.

8. A tool according to claim 7, **characterised in that** the mobile element (4) comprises an inclined face (41) adapted to cooperate with a cut-off corner (61) of the thrust block (60), the cut-off corner having a slope complementary to the inclined face (41).

9. A tool according to claim 7, **characterised in that** it comprises a mechanical coupling fixed block (7) placed at a distance from the mobile element (4) and opposite the matrix (2), designed to cooperate with the thrust block (60) adapted to move in the support, the thrust block having two opposite cut-off corners (61, 62) with reverse slopes and designed to cooperate mutually with one inclined face (41) of the mobile element and a bevelled profile (70) of the fixed block respectively.

10. A tool according to claim 9, **characterised in that** the recess (23) is created in the matrix by the mobile element (4) and **in that** the fixed block (7) and the thrust block (60) constitute locking means for locking the mobile element at the limit of travel in the recess (23) of the matrix.

11. A tool according to claim 5, **characterised in that** it comprises an actuator (8) controlling the displacement and locking of the mobile element independently of the displacement of the punch or the matrix, the actuator being preferably controlled with electromechanical, electropneumatic or electrohydraulic controls.

12. A tool according to any of the preceding claims, **characterised in that** it comprises the use of a main heat-resistant film (90) fixed to a part of one of the sides of a blank (5a) designed to be stamped by the said tool, that side being designed to be opposite the base and/or at least one of the walls of the matrix, and the part associated with the film being that designed to cooperate with the base and/or the wall or walls of the matrix, except with the zone corresponding with and surrounding the recess (23).

13. A tool according to claim 12, **characterised in that** it uses a secondary film (92) which is designed to support, without being secured thereto, the remaining part of the blank that is not associated with the main film (90).

14. A method for manufacturing a piece made of thermoplastic material by stamping, particularly thermoplastic material reinforced, for example, by long or continuous fibres, woven or not, by means of a tool according to any of the preceding claims.

15. A method according to claim 14, **characterised in that** it comprises the following successive steps:
- flattening of a blank (5a) at the opening (22) of the matrix (2),
- displacement of the punch (3) opposite the blank towards the inside of the matrix or displacement of the matrix towards the punch, for forming bends in the blank,
- temporary holding of part of the blank through the recess (23) of the tool,
- movement of the mobile element (4) concurrently with the displacement of the punch or the matrix to form at least one additional bend,
- closing of the recess (23) by positioning the mobile element (4), which is preferably locked, at the limit of its travel, and
- compression of the punch (3) against the matrix (2).

## Patentansprüche

1. Werkzeug (1) zum Prägen eines thermoplastischen Teils ausgehend von einem thermoplastischen Rohling, mit einem ausgehöhlten Prägestock (2), der durch einen Boden (20), durch Seitenwände (21 a, 21 b, 21 c) und durch eine dem Boden gegenüberliegende Öffnung (22) abgegrenzt ist, sowie einem sich abhebenden Stempel (3), der dazu bestimmt ist, über die Öffnung (22) mit dem Prägestock zusammenzuwirken, **dadurch gekennzeichnet, dass** es mindestens ein mobiles Element (4) umfasst, das im Prägestock oder im Stempel mindestens eine Aussparung (23) erzeugen kann, die dazu bestimmt ist, beim Zusammenwirken von Prägestock und Stempel verschlossen zu werden.

2. Werkzeug nach Anspruch 1, **dadurch gekennzeichnet, dass** die Aussparung (23) im Boden und/oder in den Seitenwänden des Prägestocks oder aber im Korpus des Prägestempels erzeugt wird.

3. Werkzeug nach Anspruch 1 oder 2, **dadurch gekennzeichnet, dass** das mobile Element (4) eine geeignete Form aufweist, um die Aussparung (23), mit der es zusammenwirkt, zu schließen.

4. Werkzeug nach einem der vorausgehenden Ansprüche, **dadurch gekennzeichnet, dass** das mobile Element (4) eine Kontaktfläche (43) aufweist, deren Form der gegenüber dem mobilen Element zu formenden Form der Oberfläche angepasst ist.

5. Werkzeug nach einem der vorausgehenden Ansprüche, **dadurch gekennzeichnet, dass** es ein Verriegelungsmittel (60, 7, 8) umfasst, um das mobile Element (4) in der Endstellung in der Aussparung (23) zu blockieren.

6. Werkzeug nach einem der vorausgehenden Ansprüche, **dadurch gekennzeichnet, dass** das mobile Element (4) durch eine mechanische Koppelung der Bewegung des Stempels (3) oder des Prägestocks (2) unterliegt oder unabhängig ist.

7. Werkzeug nach einem der vorausgehenden Ansprüche, **dadurch gekennzeichnet, dass** es eine Halterung (6) für den Stempel (3) umfasst, deren Bewegung die Bewegung des Stempels steuert, wobei die Halterung einen Schiebeblock (60) zum Bewegen des mobilen Elements (4) umfasst, dessen geometrische Form geeignet ist, mit der geometrischen Form des mobilen Elements zusammenzuwirken, um die Bewegungsgeschwindigkeit des mobilen Elements in Bezug zur Bewegungsgeschwindigkeit des Stempels zu kontrollieren.

8. Werkzeug nach Anspruch 7, **dadurch gekennzeichnet, dass** das mobile Element (4) eine schräge Seite (41) umfasst, die mit einer abgeschnittenen Seite (61) des Schiebeblocks (60) zusammenwirken kann, wobei die abgeschnittene Seite eine zur schrägen Seite (41) komplementäre Schräge aufweist.

9. Werkzeug nach Anspruch 7, **dadurch gekennzeichnet, dass** es einen festen Block (7) zur mechanischen Koppelung umfasst, der vom mobilen Element (4) entfernt und dem Prägestock (2) gegenüberliegend angeordnet und dazu bestimmt ist, mit dem Schiebeblock (60) zusammenzuwirken, der in der Halterung beweglich sein kann, wobei der Schiebeblock zwei abgeschnittene entgegengesetzte Seiten (61, 62) mit entgegengesetzten Schrägen aufweist, die dazu bestimmt sind, gegenseitig jeweils mit einer schrägen Seite (41) des mobilen Elements und einem abgefasten Profil (70) des festen Blocks zusammenzuwirken.

10. Werkzeug nach Anspruch 9, **dadurch gekennzeichnet, dass** die Aussparung (23) vom mobilen Element (4) im Prägestock erzeugt wird und dass der feste Block (7) und der Schiebeblock (60) ein Verriegelungsmittel bilden, um das in der Endstellung in der Aussparung (23) des Prägestocks angekommene mobile Element zu blockieren.

11. Werkzeug nach Anspruch 5, **dadurch gekennzeichnet, dass** es ein Stellglied (8) aufweist, das die Bewegung und Verriegelung des mobilen Elements unabhängig von der Bewegung des Stempels bzw. des Prägestocks steuert, wobei das Stellglied vorzugsweise elektromechanisch, elektropneumatisch oder elektrohydraulisch gesteuert wird.

12. Werkzeug nach einem der vorausgehenden Ansprüche, **dadurch gekennzeichnet, dass** es die Anwendung einer wärmebeständigen Hauptfolie (90) umfasst, die auf einem Teil einer der Seiten eines Rohlings (5a) fixiert ist und dazu dient, von diesem Werkzeug geprägt zu werden, wobei diese Seite dazu dient, gegenüber dem Boden und/oder mindestens gegenüber einer der Wände des Prägestocks zu liegen, und der der Folie zugeordnete Teil dazu dient, mit dem Boden und/oder der Wand bzw. den Wänden des Prägestocks zusammenzuwirken, außer mit dem der Aussparung (23) entsprechenden und die Aussparung (23) umgebenden Teil.

13. Werkzeug nach Anspruch 12, **dadurch gekennzeichnet, dass** es eine zweite Folie (92) nutzt, auf der der restliche Teil des Rohlings, der nicht der Hauptfolie (90) zugeordnet ist, zur Auflage kommen, jedoch nicht fixiert werden soll.

14. Fertigungsverfahren durch Prägen eines Teils auf Basis eines thermoplastischen Materials, insbesondere aus einem thermoplastischen Material, das durch lange oder fortlaufende, gewebte oder nicht gewebte Fasern verstärkt ist, mittels eines Werkzeugs nach einem der vorausgehenden Ansprüche.

15. Verfahren nach Anspruch 14, **dadurch gekennzeichnet, dass** es nacheinander folgende Schritte umfasst:
- das Auseinanderfalten eines Rohlings (5a) im Bereich der Öffnung (22) des Prägestocks (2),
- das Bewegen des Stempels (3) gegenüber dem Rohling und in den Prägestock oder das Bewegen des Prägestocks in Richtung des Stempels, um im Rohling Faltungen zu bilden,
- die vorübergehende Aufnahme eines Teils des Rohlings durch die Aussparung (23) des Werkzeugs,
- die die Bewegung des Stempels oder des Prägestocks begleitende Bewegung des mobilen Elements (4), um mindestens eine zusätzliche Faltung zu bilden,
- das Verschließen der Aussparung (23) durch das Positionieren des mobilen Elements (4) in der Endstellung, das vorzugsweise verriegelt ist, und
- das Pressen des Stempels (3) gegen den Prägestock (2).
